# EUROPEAN PATENT SPECIFICATION

(11) **EP 2 719 650 B1**
(45) Date of publication and mention of the grant of the patent: **10.02.2016**
(21) Application number: 11868006.5
(22) Date of filing: 13.06.2011
(51) Int. Cl.: B66B 5/02, B66B 1/30

(54) **ELEVATOR CONTROL DEVICE**
AUFZUGSTEUERUNGSVORRICHTUNG
DISPOSITIF DE COMMANDE D'ASCENSEUR

(43) Date of publication of application: 16.04.2014
(73) Proprietor: Mitsubishi Electric Corporation, Tokyo 100-8310 (JP)
(72) Inventor: KARIYA, Yoshitaka, Tokyo 100-8310 (JP)
(74) Representative: Hoffmann Eitle
(86) International application number: PCT/JP2011/003338
(87) International publication number: WO 2012/172590

(56) References cited:
- JP-A- 60 131 095
- JP-A- 2005 112 599
- JP-A- 2005 192 298
- JP-A- 2007 070 080
- JP-A- 2009 143 711
- US-A- 5 945 644
- US-A1- 2001 017 239

## Description

### TECHNICAL FIELD

The invention relates to an elevator control device.

### BACKGROUND ART

A conventional elevator control device without losing an energy-saving effect by charging, and having an energy-saving effect even with a low-cost and a low-capacity secondary battery, has been proposed in the following patent document. In the elevator control device concerned, it includes a converter which converts AC power of an AC power supply to DC power and outputs it to DC bus lines, an inverter which converts the DC power from the DC bus lines to AC power to drive an electric motor, a controller for controlling the inverter, an electric power storage means for storing electric power in order to drive the electric motor from the DC bus lines, and a control means for controlling an operation of an elevator car in case of a power failure.

JP 2009 143711 A discloses an elevator control device comprising a rechargeable battery to store regenerated power from the elevator drive.

The electric power storage means stores DC power from the DC bus lines in the case of a regenerative operation of an elevator car, and is capable of driving the electric motor by the stored DC power through the inverter in the case of a power running operation of an elevator car or in case of a power failure. Here, in order to urgently stop the electric motor in any abnormal elevator situation, the AC power supply is connected to the converter through the first switching means, the electric power storage means is connected to the DC bus lines through the second switching means, and the control means is configured to open the first and the second switching means by an emergency stop signal.

### PRIOR ART DOCUMENT

### PATENT DOCUMENT

Patent Document 1: Japanese Unexamined Patent Publication No.2002-145543

### SUMMARY OF THE INVENTION

### PROBLEMS TO BE SOLVED BY THE INVENTION

In case of a power failure, the first and the second switching means are not to be opened, since electric power can be supplied to the DC bus lines from the electric power storage means. However, in the case when a power failure happens in the charging mode in which the electric power cannot be supplied from the electric power storage means, the first and the second switching means are to be opened by the necessity of isolating the inverter from the DC bus lines. This is because the electric power storage means must be charged continuously for a given length of time and the execution of the charging mode must not be interrupted.

There has been a problem in that when the second switching means is closed again in the state where voltage of the DC bus lines becomes unstable after the second switching means is opened, an inrush current due to the potential difference between the DC bus lines and the electric power storage means becomes large, and therefore the second switching means is hard to be closed again.

The invention provides an elevator control device in which after the first and the second switching means are opened in case of a power failure, an electric motor can be operated using electric power of the electric power storage means through the second switching means closed again while suppressing the inrush current.

### MEANS FOR SOLVING THE PROBLEMS

An elevator control device according to the first invention includes: a converter which converts AC power from an AC power supply connected through a first switching means capable of opening and closing to DC power; an inverter which converts the DC power to AC power to drive an electric motor which moves an elevator car up and down; an electric power storage means, having an input voltage adjustment capability, being connected to the output of the converter through a second switching means capable of opening and closing, and for storing electric power; a rechargeable battery connected to the output of the converter through a third switching means capable of opening and closing; and a control means opens the first switching means and the second switching means based on a power failure detection signal of the AC power supply, closes the third switching means to connect the rechargeable battery to the output of the converter, and then closes the second switching means after setting the input voltage of the electric power storage means to a constant voltage of being an assumed terminal voltage of the rechargeable battery. According to the present invention, the control unit opens the first and the second switching means based on a power failure detection signal of the AC power supply, connects the rechargeable battery to the output of the converter by closing the third switching means, and then closes the second switching means after the input voltage of the electric power storage means is set to the terminal
voltage of the rechargeable battery, that is, a constant voltage of being an assumed output terminal voltage of the converter 7. Because of this, since the second switching means is closed again after setting the input voltage of the electric power storage means to a level close to the output terminal voltage of the converter, the inrush current which flows from the electric power storage means into the output side of the converter can be suppressed. Therefore, by closing the second switching means again, the elevator car can be operated with the electric power of the electric power storage means.

In an elevator control device according to the second embodiment of the invention, a constant voltage is preferable to be the terminal voltage of the rechargeable battery right after driving the motor using the inverter by the rechargeable battery. Such a constant voltage can make the deviation between the assumed constant voltage and a real voltage smaller, since the voltage of the rechargeable battery can be comparatively stable right after the electric motor is driven by the rechargeable battery. Therefore, the amount of inrush current when the second switching means is closed can be suppressed more. Furthermore, it is more preferable that by detecting through the current detection means whether the running state of the electric motor is in the regenerative operation or in the power running operation, the assumed constant voltage of the rechargeable battery is altered based on the detection result. Namely, the supply voltage of the rechargeable battery may be slightly decreased by the power running operation and slightly increased by the regenerative operation compared to the voltage before driving the electric motor. By altering the constant voltage based on the detection result, the amount of inrush current generated when the second switching means is closed can be further suppressed.

A constant voltage in an elevator control device according to the third embodiment of the invention is preferable to be a voltage at the current shutoff after applying an electrical current through the inverter using the rechargeable battery so as not to generate a rotating magnetic field in the electric motor on average. According to this control means, in addition to suppressing the power consumption of the rechargeable battery, the deviation between the constant voltage and the actual voltage can be made small, since a voltage of the rechargeable battery can be comparatively stabilized in a short time.

### EFFECT OF THE INVENTION

According to an elevator control device of the invention, after the first and the second switching means are opened in case of a power failure, the electric motor can be operated with the electric power of the electric power storage means by closing again the second switching means while suppressing the inrush current.

### BRIEF DESCRIPTION OF THE DRAWINGS

Fig. 1 is an overall configuration diagram of an elevator according to an embodiment of the present invention.
Fig.2 is a flowchart showing an operation of an elevator control device of Fig. 1.

### EMBODIMENT FOR CARRING OUT THE INVENTION

### Embodiment 1.

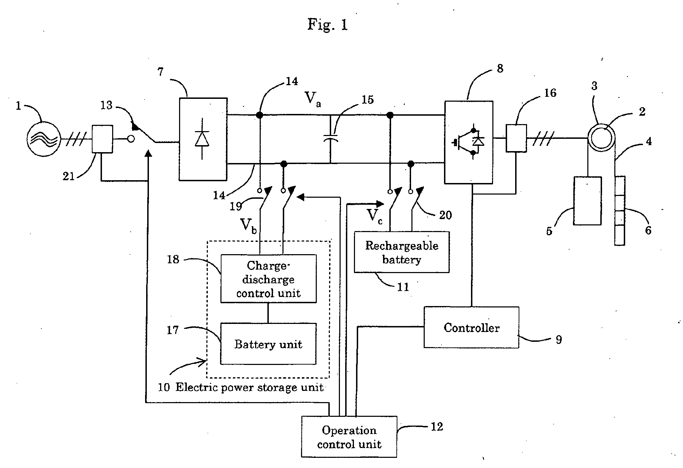

An embodiment of the present invention will be described in accordance with Fig. 1. In Fig.1, an elevator includes an electric motor 2, a traction machine 3 connected to a rotating shaft of the electric motor 2, a rope 4 wound around the traction machine 3, an elevator car suspended on one end of the rope 4, and a counter weight 6 suspended on the other end of the rope. And the elevator car 5 and the counter weight 6 are raised and lowered by rotation of the electric motor 2.

An elevator control device includes a converter 7 configured with a diode or the like, which converts the AC power supply 1 to DC power, an inverter 8 which converts the DC power to AC power to drive the electric motor 2, a controller for controlling the inverter 8, an electric power storage device 10 as an electric power storage means for storing and outputting electric power in order to drive the electric motor 2, a rechargeable battery 11 used as an auxiliary power supply in case of a power failure, and an operation control unit 12 as a control means for controlling an operation of the elevator car 5.

The AC power supply 1 is inputted to the converter 7 through a first switch 13 as a first switching means, and the output as DC power is outputted across DC bus lines 14. A capacitor 15 for smoothing a ripple component of the DC power is connected between the DC bus lines 14.

The inverter 8, which is configured with a transistor and an IGBT (Insulated Gate Bipolar Transistor) or the like, converts the DC power of the DC bus lines 14 to a variable voltage and variable frequency AC power, and drives the electric motor 2. And in the output side of the inverter, a current detector 16 is provided for judging by the current direction whether the electric motor 2 is in the power running operation or in the regenerative operation.

The controller 9, which manages and controls the entire elevator system, creates position and speed commands of the elevator car 5 along with start and stop commands of the elevator car 5, and outputs command signals to the inverter 8.

The electric power storage device 10, which is connected to the DC bus lines 14 through a second switch 19 as a second switching means, includes a battery unit 17 for which a lead storage battery or a nickel-hydrogen battery as a secondary battery is used, and a charge-discharge control unit 18, configured with a DC/DC converter and the like, for controlling a charge-discharge electric power of the battery unit 17 and for regulating a voltage during charging and discharging.

The rechargeable battery 11 is an auxiliary power supply having an electric charge amount that enables an elevator car 5 to move at least one floor upward and downward in case of a power failure, is connected to the DC bus lines 14 through a third switch 20 as a third switching means, and is configured in such a way that an input voltage of the inverter 8 is equal to the supply voltage of the rechargeable battery 11 by closing the third switch 20.

The operation control unit 12 is connected so as to receive a power failure detection signal from a voltage detector 21 which is installed in the input side of the first switch 13 and detects a power failure of the AC power supply 1, to transmit and receive signals to and from the controller 9, and to control the charge-discharge control unit 18 by controlling the opening and closing state of the first switch 13, the second switch 19, and the third switch 20 by on-off signals.

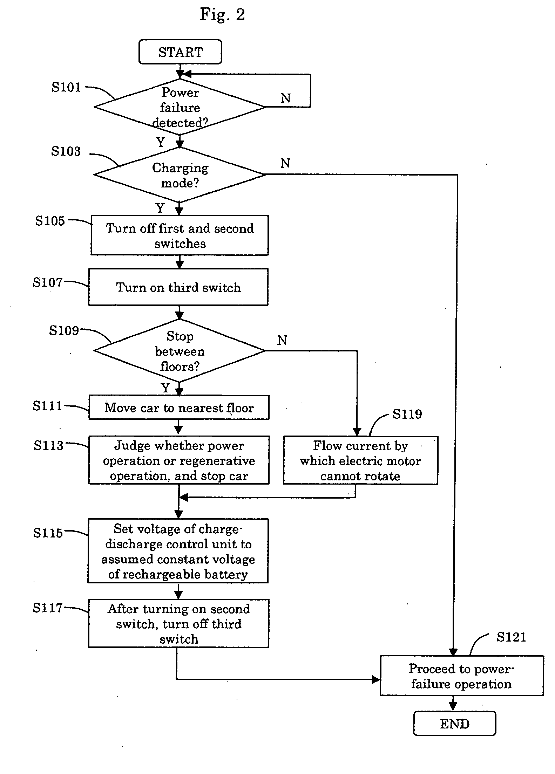

The operation of the elevator control device configured as above will be described according to Fig. 1 and Fig. 2.

### <During normal state of AC power supply 1>

When the first switch 13 is turned on in order to supply the AC power supply 1 to the electric motor 2, the charge-discharge control unit 18 sets the voltage Vb to the same value as the voltage Va across the DC bus lines 14 which is uniquely determined from the voltage of the AC power supply 1. Thereafter, the operation control unit 12 turns on the second switch 19 to connect the power storage unit 10 to the DC bus lines 14, and makes the power storage unit 10 be in a chargeable and dischargeable state. When the operation of the elevator car 5 is started, the power is stored from the DC bus lines 14 to the power storage unit 10 during charging for the power storage unit 10 and a regenerative operation of the electric motor 2. And the power is supplied from the power storage unit 10 to the DC bus lines 14 during a power running operation. In such a way, the elevator can suppress the power consumption by effectively utilizing the energy during the regenerative operation for the energy during the power running operation by using the power storage unit 10.

### < During power failure of AC power supply 1>

The operation control unit 12 judges depending on the presence or absence of the power failure detection signal from the voltage detector 21 whether a power failure of the AC power supply 1 is detected or not (step S101), and when a power failure is detected, whether the power storage unit 10 is in a charging mode or not, is judged (step S103). If not in the charging mode, the operation control unit 12 continues to operate the elevator car using the electric power of the power storage unit 10 while maintaining the turn-on state of the first switch 13 and the second switch 19 (hereinafter referred to as power-failure operation) (step S121).

On the other hand, if the power storage unit 10 is in the charging mode, the operation control unit 12 turns off the first switch 13 and the second switch 19 (step S105), and then turns on the third switch 20 (step S107).

Depending on whether the elevator car 5 is in a door zone or not, the operation control unit 12 judges whether the elevator car 5 stops between floors or not (step S109). In the case where the elevator car 5 stops between floors, the operation control unit 12 drives the electric motor 2 through the inverter 8 using the electric power from the rechargeable battery 11 to move the elevator car 5 to the nearest floor (step S111), and depending on the current flow direction through the inverter 8 and the electric motor 2 detected by the current detector 16, whether the electric motor 2 is in the power running operation or in the regenerative operation is detected, making the elevator car 5 arrive and stop at a nearest floor (step S113).

In step S113, in the case where the electric motor 2 is in the power running operation, the operation control unit 12 regards the terminal voltage of the rechargeable battery 11, that is, the output voltage of the converter 7, as being a first assumed constant voltage Vcr after the power running operation, and sets the voltage Vb of the charge-discharge control unit 18 to the constant voltage Vcr described above, and controls the charge-discharge control unit 18 to generate the voltage Vcr of the power storage unit 10. In the case where the electric motor 2 is in the regenerative operation, the operation control unit 12 regards the terminal voltage of the rechargeable battery as being a second assumed constant voltage Vcc assumed after the regenerative operation, and sets the voltage Vb of the charge-discharge control unit 18 to the assumed constant voltage Vcc described above, and sets a generated voltage of the power storage unit 10 to Vcc (step S115). Incidentally, the relation Vcc > Vcr holds.

The operation control unit 12, after turning on the first switch 13 and the second switch 19, isolates the rechargeable battery 11 from the DC bus lines 14 by turning off the third switch 20 (step S 117). Thus, a little inrush current flows between the power storage unit 10 and the DC bus lines 14 due to the potential difference between the assumed constant voltage and the actual voltage. The operation control unit 12, while maintaining the turn-on state of the first switch 13 and the second switch 19, operates the elevator car 5 using the electric power of the power storage unit 10 (step S121).

On the other hand, in step S109, since there is no need to rotate the motor 2 in the case where the elevator car 5 stops within a door zone, the operation control unit 12 flows from the inverter 8 an electric current by which the electric motor 2 cannot rotate (step S119). As the non-rotatable current, in a situation where the brake (not shown) of the electric motor 2 are locked, flowing an electric current for several seconds alternately in the normal and the reverse rotation directions of the electric motor 2 is given as an example.

The operation control unit 12 controls the charge-discharge control unit 18 of the power storage unit 10 to generate the third assumed constant voltage Vcs of the rechargeable battery 11 after flowing the current from the rechargeable battery 11 to the electric motor 2 in step S119 (step S115), and turns off the third switch 20 after turning on the first switch 13 and the second switch 19 (step S 117). Then, the operation proceeds to the power-failure operation (step S121). Incidentally, the third constant voltage Vcs is nearly equal to the first constant voltage Vcr.

The elevator control device according to the present embodiment includes: a converter 7 which converts AC power from an AC power supply 1 connected through a first switch 13 capable of being opened and closed to DC power; an inverter 8 which converts the DC power to AC power and drives an electric motor 2 by which an elevator car 5 is moved up and down; an electric power storage device 10, having an input voltage adjustment capability, being connected to the output of the converter 7 through a second switch 19 capable of being opened and closed, and storing electric power; a rechargeable battery 11 connected to the converter output through a third switch 20 capable of being opened and closed; and an operation control unit 12, after turning off the first switch 13 and the second switch 19 based on a power failure detection signal of the AC power supply 1 and turning on the third switch 20 for the connection of the rechargeable battery 11, for turning on the second switch 19 after setting the input voltage of the electric power storage device 10 to a constant voltage of being an assumed terminal voltage of the rechargeable battery 11.

According to such a control device, the operation control unit 12 turns off the first and the second switches 13 and 19 based on a power failure detection signal of the AC power supply 1, connects the rechargeable battery 11 to the output of the converter 7 by turning on the third switch 20, and then turns on the second switch 19 after the input voltage of the electric power storage device 10 is set to the terminal voltage of the rechargeable battery 11, that is, a constant voltage of an assumed output terminal voltage of the converter 7. Because of this, since the second switch 19 is turned on again after setting the input voltage of the electric power storage device 10 to a level close to the output terminal voltage of the converter 7, the inrush current which flows from the electric power storage device 10 into the output side of the converter 7 can be suppressed. Therefore, by turning on the second switch 19 again, the elevator car 5 can be operated using the electric power of the electric power storage device.

As described above, a constant voltage in an elevator control device is preferable to be the terminal voltage of the rechargeable battery 11 right after driving the motor 2 using the inverter 8 by the rechargeable battery 11. Such a constant voltage can make the deviation between the assumed constant voltage and the actual voltage smaller, since the voltage of the rechargeable battery 11 can be comparatively stable right after the electric motor 2 is driven by the rechargeable battery 11. Therefore, the amount of the inrush current when the second switch 19 is turned on can be suppressed more. Furthermore, it is more preferable that by detecting through the current detector 16 whether the running state of the electric motor 2 is in the regenerative operation or in the power running operation, the assumed constant voltage of the rechargeable battery 11 is altered based on the detection. Namely, the supply voltage of the rechargeable battery 11 may be slightly decreased by the power running operation and slightly increased by the regenerative operation compared to the voltage before driving the electric motor 2. By altering the constant voltage based on the detection result, the amount of inrush current generated when the second switch 19 is turned on can be further suppressed.

As described above, a constant voltage in an elevator control device is preferable to be a voltage at the current shutoff after applying an electrical current through the inverter 8 using the rechargeable battery 11 so as not to generate a rotating magnetic field in the electric motor 2 on average. According to this control device, in addition to suppressing the power consumption of the rechargeable battery 11, the deviation between the constant voltage and the actual voltage can be made small, since a voltage of the rechargeable battery 11 can be comparatively stabilized in a short time.

### Explanation of Reference Numerals

- 1: AC power supply
- 2: Electric motor
- 5: Elevator car
- 7: Converter
- 8: Inverter
- 10: Electric power storage device
- 11: Rechargeable battery
- 12: Operation control unit
- 13: First switch
- 14: DC bus line
- 18: Charge-discharge control unit
- 19: Second switch
- 20: Third switch

## Claims

1. An elevator control device comprising:
a converter which converts AC power from an AC power supply connected through a first switching means capable of opening and closing to DC power;
an inverter which converts the DC power to AC power to drive an electric motor which moves an elevator car up and down;
an electric power storage means, having an input voltage adjustment capability, being connected to an output of the converter through a second switching means capable of opening and closing, for storing electric power;
a rechargeable battery connected to the converter output through a third switching means capable of opening and closing; and
a control means which opens the first switching means and the second switching means based on a power failure detection signal of the AC power supply, and then closes the third switching means for connecting the rechargeable battery to the converter output, for opening the second switching means after setting the input voltage of the electric power storage means to a constant voltage of being an assumed terminal voltage of the rechargeable battery.

2. An elevator control device according to claim 1, wherein the constant voltage is a terminal voltage of the rechargeable battery right after driving the electric motor using the inverter by the rechargeable battery.

3. An elevator control device according to claim 1, wherein the constant voltage is a voltage at a current shutoff after applying an electrical current through the inverter using the rechargeable battery so as not to generate a rotating magnetic field in the electric motor on average.

## Patentansprüche

1. Eine Aufzugssteuervorrichtung, umfassend:
einen Konverter, welcher eine AC-Leistung von einer AC-Energieversorgung, welche über zum Öffnen und Schließen geeignete erste Schaltmittel verbunden ist, in eine DC-Leistung umwandelt;
einen Inverter, welcher die DC-Leistung in eine AC-Leistung umwandelt, um einen Elektromotor anzutreiben, welcher eine Aufzugskabine nach oben und nach unten bewegt;
elektrische Energiespeichermittel, welche eine Eingangsspannung-Einstellfähigkeit aufweisen, welche mit einem Ausgang des Konverters über zum Öffnen und Schließen geeignete zweite Schaltmittel zum Speichern von elektrischer Energie verbunden sind;
eine wiederaufladbare Batterie, welche mit dem Konverterausgang über zum Öffnen und Schließen geeignete dritte Schaltmittel verbunden ist; und
Steuermittel, welche die ersten Schaltmittel und die zweiten Schaltmittel basierend auf einem Stromausfall-Detektionssignal der AC-Energieversorgung öffnen und dann die dritten Schaltmittel zum Verbinden der wiederaufladbaren Batterie mit dem Konverterausgang schließen, zum Öffnen der zweiten Schaltmittel nach dem Einstellen der Eingangsspannung der elektrischen Energiespeichermittel auf eine konstante Spannung, welche eine angenommene Anschlussspannung der wiederaufladbaren Batterie ist.

2. Aufzugssteuervorrichtung gemäß Anspruch 1, wobei die konstante Spannung eine Anschlussspannung der wiederaufladbaren Batterie direkt nach einem Betreiben des Elektromotors unter Verwendung des Inverters durch die wiederaufladbare Batterie ist.

3. Aufzugssteuervorrichtung gemäß Anspruch 1, wobei die konstante Spannung eine Spannung bei einem Stromabschalten nach einem Anlegen eines elektrischen Stroms durch den Inverter unter Verwendung der wiederaufladbaren Batterie ist, um ein rotierendes Magnetfeld in dem Elektromotor im Durchschnitt nicht zu erzeugen.

## Revendications

1. Dispositif de commande d'ascenseur comprenant :
un convertisseur qui convertit du courant alternatif CA d'une source de courant alternatif CA connectée par un premier moyen de commutation capable d'ouverture et de fermeture en courant continu CC ;
un convertisseur qui convertit le courant continu CC en courant alternatif CA pour entraîner un moteur électrique qui déplace une cabine d'ascenseur vers le haut et le bas ;
un moyen de stockage d'énergie électrique présentant une capacité d'ajustement de tension d'entrée, connecté à une sortie du convertisseur par un deuxième moyen de commutation capable d'ouverture et de fermeture, pour le stockage d'énergie électrique ; une batterie rechargeable connectée à la sortie du convertisseur par un troisième moyen de commutation capable d'ouverture et de fermeture ; et
un moyen de commande qui ouvre le premier moyen de commutation et le deuxième moyen de commutation sur la base d'un signal de détection de défaillance d'alimentation de la source de courant alternatif et ferme ensuite le troisième moyen de commutation pour connecter la batterie rechargeable à la sortie du convertisseur pour l'ouverture du deuxième moyen de commutation après le réglage de la tension d'entrée du moyen de stockage d'énergie électrique à une tension constante qui est une tension terminale supposée de la batterie rechargeable.

2. Dispositif de commande d'ascenseur selon la revendication 1, dans lequel la tension constante est une tension terminale de la batterie rechargeable juste après l'entraînement du moteur électrique en utilisant le convertisseur par la batterie rechargeable.

3. Dispositif de commande d'ascenseur selon la revendication 1, dans lequel la tension constante est une tension au niveau d'une coupure de courant après application d'un courant électrique par le convertisseur en utilisant la batterie rechargeable de sorte à ne pas générer un champ magnétique tournant dans le moteur électrique en moyenne.
